# EUROPÄISCHE PATENTSCHRIFT

(11) **EP 1 105 610 B1**
(45) Veröffentlichungstag und Bekanntmachung des Hinweises auf die Patenterteilung: **09.10.2002**
(21) Anmeldenummer: 99952366.5
(22) Anmeldetag: 12.08.1999
(51) Int. Cl.: E05F 11/48

(54) **FÜHRUNGSSCHIENE UND VERFAHREN ZUR HERSTELLUNG EINER FÜHRUNGSSCHIENE FÜR EINEN SEIL- ODER BOWDENROHR-FENSTERHEBER**
GUIDE RAIL AND METHOD FOR PRODUCING A GUIDE RAIL FOR A CABLE OR BOWDEN TUBE WINDOW LIFT
RAIL DE GUIDAGE ET PROCEDE POUR LA FABRICATION D'UN RAIL DE GUIDAGE DESTINE A UN LEVE-VITRE A CABLE OU A TUBE BOWDEN

(30) Priorität: 14.08.1998 DE 19838347
(43) Veröffentlichungstag der Anmeldung: 13.06.2001
(73) Patentinhaber: Brose Fahrzeugteile GmbH & Co. KG Coburg, 96450 Coburg (DE)
(72) Erfinder: SELIGER, Tillmann, D-96052 Bamberg (DE); KINNELL, Craig, D-96450 Coburg (DE); KÄMMLER, Georg, D-96450 Coburg (DE)
(74) Vertreter: Baumgärtel, Gunnar, Dr.
(86) Internationale Anmeldenummer: DE9902514
(87) Internationale Veröffentlichungsnummer: WO00009846

(56) Entgegenhaltungen:
- EP-A- 0 385 167
- EP-A- 0 561 440
- US-A- 4 835 907

## Beschreibung

Die Erfindung bezieht sich auf eine Führungsschiene für einen Seil- oder Bowdenrohr-Fensterheber gemäß dem Oberbegriff des Anspruchs 1 sowie auf ein Verfahren zur Herstellung einer Führungsschiene für einen Seil- oder Bowdenrohr-Fensterheber gemäß dem Oberbegriff des Anspruchs 18.

Es sind metallische Führungsschienen für Seilfensterheber bekannt, deren Oberflächen teilweise beschichtet sind und die Bestandteil einer Fensterheber-Baugruppe sind, die entsprechend gefügt und montiert werden muß. Je nach dem verwendeten Metall und der Anzahl und Art der Füge- und Montageverfahren ist die so hergestellte Fensterheber-Baugruppe relativ schwer. Durch jedes der für die Einzelteile und gegebenenfalls Oberflächenbeschichtungen verwendete Herstellverfahren und durch jedes verwendete Füge- und Montageverfahren erhöhen sich die Fehlermöglichkeiten, die die Qualität des Fensterhebers negativ beeinflussen können.

Durch das relativ aufwendige Herstellverfahren und damit verbunden durch den Aufwand bei der Entwicklung und Qualitätssicherung sind die Herstellkosten hoch. Weiterhin ist es erforderlich, aufgrund der ungünstigen Reibpaarungen zwischen den Metalloberflächen der Führungsschienen und den Gleitstücken zur Scheibenführung die Kontaktfläche zusätzlich zu schmieren und gegebenenfalls die Führungsschiene zu beschichten.

Aus der DE 41 31 098 C1 ist eine Führungsschiene für Seilfensterheber bekannt, deren Umlenkbereiche gleichzeitig zur Befestigung der Führungsschiene am Türinnenblech vorgesehen sind. Zu diesem Zweck wird ein Befestigungsbolzen durch die Seilumlenkung, z.B. eine Seilrolle, geführt und mit dem Türinnenblech verbunden. Dadurch kann der Kraftfluß ohne Umlenkung über die Führungsschiene direkt in die Türkarosserie eingeleitet werden, so daß die Führungsschiene überwiegend Führungsaufgaben und die Übertragung von Querkräften beim Türzuschlagen wahrnehmen muß. In diesem Zusammenhang wird vorgeschlagen, die bisher verwendeten Führungsschienen aus Metall durch Kunststoff-Führungsschienen zu ersetzen. Nähere Angaben zum konstruktiven Aufbau der Kunststoff-Führungsschiene werden nicht gemacht.

Aus der EP 0 561 440 A1 ist ein Montageträger zur Montage einer Fensterscheibe und eines Fensterhebers in einer Fahrzeugtür bekannt, der einteilig aus Kunststoff gefertigt ist und eine zentrale Befestigungsplatte zur Aufnahme des Fensterhebers und mehrere sternförmig von der zentralen Befestigungsplatte ausgehende und mit dieser einteilig verbundene Hohlspeichen aufweist, an deren Enden ebenfalls einteilig Führungskanäle zur Aufnahme der Fensterscheibenkanten vorgesehen sind. Die Hohlspeichen weisen mehrere integral mit ihnen verbundene Befestigungsklammern auf, die zur Befestigung des Montageträgers an der Fahrzeugtür dienen.

Die Fensterführungskanäle zur Aufnahme der Fensterscheibenkanten sind von beabstandeten Seitenwänden begrenzt, die aus mehreren von einer Basis ausgehenden und wechselseitig versetzt zueinander angeordneten Laschen bestehen. In den Fensterführungskanälen zwischen den Laschen ist ein Gleitstreifen aus einem Elastomer eingelegt, um die Gleitfähigkeit bei der Führung der Fensterscheibenkanten zu verbessern. Als Alternative ist vorgesehen, die Fensterführungskanäle aus separatem Kunststoffmaterial oder aus metallischen Gleitstreifen herzustellen, die in geeigneter Weise an den Enden der Hohlspeichen des Montageträgers befestigt werden. Die notwendige Steifigkeit des bekannten Montageträgers wird durch die Form der Hohlspeichen sowie durch eine Kreuzverrippung des zentralen Befestigungsteils hergestellt.

Der bekannte Kunststoff-Montageträger weist eine komplexe Form auf, die nur mit erheblichem Aufwand zur Einhaltung der engen Fertigungstoleranzen herstellbar ist. Den aufgabenbedingten Anforderungen an die Festigkeits- und Führungseigenschaften, die an ein Fensterhebermodul gestellt werden, kann der bekannte Montageträger nur bedingt gerecht werden, weshalb zusätzliche Maßnahmen zur Erhöhung der Steifigkeit und zur Verbesserung der Gleiteigenschaften in den Führungskanälen zur Aufnahme der Fensterscheibe erforderlich sind.

Aus der US-PS 4,835,907 ist eine Führungsschiene für einen Fensterheber bekannt, die einen längserstreckten Führungsbereich zur Führung eines Seiles aufweist und die an den Enden dieses Führungsbereiches jeweils mit einem Umlenkbereich für das in dem Führungsbereich geführte Seil versehen ist. Diese Umlenkbereiche dienen dazu, daß Seil zu einem Antrieb hin umzulenken. In den Umlenkbereichen wird das Seil jeweils in einer gekrümten Nut geführt, in die zur Verbesserung der Gleiteigenschaften zusätzlich ein Kunststoffelement eingefügt ist. Die Umlenkbereiche dienen außerdem als Befestigungsbereiche zur Befestigung der Führungsschiene an einer Fahrzeugtür und weisen Verstärkungselemente auf.

In der EP 0385 167 A1, die den stand der Technik gemäß Oberbegriff des Anspruchs 1 und auch den des Anspruchs 18 zeigt, ist ein Seil-Umlenkstück für ein Bowdenrohr-Fensterheber beschrieben, das an den Enden einer aus Metall oder Kunststoff bestehenden Profilschiene befestigt ist und das zur Versteifung eine abgewinkelte Seitenwand aufweist.

Aufgabe der vorliegenden Erfindung ist es, eine Führungsschiene und ein Verfahren zur Herstellung einer Führungsschiene für einen Seil- oder Bowdenrohr-Fensterheber der eingangs genannten Art anzugeben, die auf die Verwendung von Kunststoff als Material für zumindest einen Teil der Führungsschiene abgestimmt sind.

Diese Aufgabe wird hinsichtlich der Führungsschiene durch die Merkmale des Anspruchs 1 und hinsichtlich des Herstellungsverfahrens durch die Merkmale des Anspruchs 18 gelöst.

Danach besteht zumindest der Führungsbereich der Führungsschiene aus Kunststoff, und die Führungsschiene weist einen mit dem Führungsbereich verbundenen, separaten Versteifungsbereich mit Versteifungselementen auf, der sich in Schienenlängsrichtung zumindest über den mittleren Abschnitt des Führungsbereiches erstreckt und der auch den mindesten einen Befestigungsbereich der Führungsschiene umfaßt.

Da die Führungsschiene teilweise oder vollständig aus Kunststoff besteht sowie durch die konstruktive Unterteilung der Führungsschiene in einen Führungsbereich, der überwiegend die Aufgabe einer Gleitführung übernimmt, und in einen Versteifungsbereich, der für die erforderliche Biege- und Torsionsfestigkeit sorgt und überwiegend die mechanisch tragenden Funktionen der Führungsschiene übernimmt, läßt sich die Führungsschiene dahingehend auslegen, daß sie sich durch ein geringes Gewicht und geringe Herstellungskosten auszeichnet.

Durch die hierbei mögliche Integration mehrerer Funktionen, die bisher meist aus mehreren anschließend zu montierenden Einzelteilen gefertigt wurden, können zudem Fehlermöglichkeiten ausgeschlossen bzw. verringert werden und damit die Qualität der Baueinheit insgesamt verbessert.

Die erfindungsgemäße Ausbildung einer Führungsschiene für einen Seil- oder Bowdenrohr-Fensterheber wird sowohl den mechanischen Beanspruchungen einer Führungsschiene in Bezug auf die Biege- und Torsionssteifigkeit als auch den tribologischen Anforderungen an eine Führungsschiene in Bezug auf die Abriebfestigkeit, gute Gleiteigenschaften zur Scheibenführung und eine geringstmögliche Geräuschentwicklung gerecht.

Durch die zumindest teilweise Ausbildung der Führungsschiene (zumindest von deren Führungsbereich) aus Kunststoff können die bei der Konstruktion von Kunststoffteilen größeren Gestaltungsfreiheiten genutzt werden. Durch die Abstimmung tribologisch besonders geeigneter Reibpaarungen aus Kunststoffen zwischen dem Führungsbereich der Schiene und dem Gleitstück zur Scheibenführung ist die Möglichkeit gegeben, diese Reibpaarung ohne zusätzliche Schmierung zu betreiben und so wirtschaftlich und technologisch eine Produktverbesserung herbeizuführen.

Vorzugsweise sind die Rückseiten der Gleitflächen des Führungsbereichs nicht unmittelbar mit den Versteifungselementen verbunden, so daß die notwendige aber auch hinreichende Trennung zwischen dem Führungsbereich und dem Versteifungsbereich gewährleistet ist. Versteifungselemente können somit in allen Bereichen der Führungsschiene angeordnet werden, nur nicht im Bereich der Gleitflächen, d.h. im Bereich des Weges der Fensterscheibenmitnehmer. Die Vorderseite der Führungsflächen oder -bereiche stellt dabei den Kontakt mit den Fensterscheibenmitnehmern bzw. Gleitern her.

Die Versteifungselemente bestehen vorzugsweise aus Rippen und/oder Stegen, die an eine Fläche des Versteifungsbereichs vorzugsweise integral und im wesentlichen senkrecht zur Fläche des Versteifungsbereichs angeformt sind. Die Rippen und/oder Stege können insbesondere als Waffelmuster oder Kreuzverrippung ausgebildet sein. Alternativ können die Versteifungselemente aus Hohlprofilen bestehen.

Durch die Anordnung von Versteifungselementen, wie Rippen, Stege oder Hohlprofile, im Versteifungsbereich wird ein günstiges Steifigkeits-Massenverhältnis erreicht.

Vorzugsweise sind um Krafteinleitungspunkte, beispielsweise im Bereich der Befestigungsstellen zum Verbinden der Führungsschiene mit einem Innenblech, einem Türmodul oder dgl. und/oder um Befestigungsstellen für zusätzliche Bauteile wie Fensterhebermotoren, Seilrollen oder dergleichen strahlenförmig von den Krafteinleitungspunkten ausgehende Rippen und/oder Stege angeordnet.

Dadurch werden die von den Befestigungsstellen ausgehenden Kräfte unmittelbar in die Kreuzverrippungsstruktur des Versteifungsbereichs eingeleitet, so daß die Stabilität der Führungsschiene auch an diesen notwendigen Schwachstellen gewährleistet ist.

Durch die Unterteilung der Führungsschiene in einen Versteifungsbereich und einen Führungsbereich ist die Voraussetzung dafür geschaffen, daß der Versteifungsbereich aus einem Kunststoff mit hoher mechanischer Festigkeit und der Führungsbereich aus einem Kunststoff mit guten tribologischen Eigenschaften gefertigt werden kann, wobei beide Bereiche integral miteinander verbunden werden und somit eine konstruktive Einheit ergeben. Durch die Herstellung der Führungsschiene im Zwei- oder Mehrkomponenten-Spritzgießverfahren kann die Unterteilung der Führungsschiene in einen Versteifungsbereich mit einem Werkstoff mit hoher Festigkeit und hohem E-Modul und einen Führungsbereich mit Stegen, Rippen oder Führungselementen aus einem tribologisch günstigen Werkstoff realisiert werden, der auf niedrige Reibbeiwerte, geringen Abrieb und niedrigen Geräuschpegel hin optimiert ist.

Es werden also die Führungs- und die Versteifungsfunktion konstruktiv getrennt, wobei der (mit besonderem Vorteil aus Kunststoff gezogene, gepreßte oder gegossene) Führungsbereich ohne Versteifungselemente ausgeführt und von den mechanisch höher belasteten Bereichen (Versteifungsbereich) räumlich getrennt sein kann und lediglich der Versteifungsbereich mit versteifungselementen versehen ist.

Dabei erweist es sich als vorteilhaft, den Führungsbereich über einen kurzen Hebelarm mit dem Versteifungsbereich zu verbinden und zumindest teilweise eine größere Materialdicke zu wählen.

Vorzugsweise wird der Versteifungsbereich nach dem Prinzip der Biegeträgerkonstruktion gestaltet und weist zusätzliche, den Kunststoff verstärkende Fasern, insbesondere Glas - oder Kohlefasern, auf. Beispielsweise weist der mittlere Teil des Versteifungsbereichs einen größeren Querschnitt auf als dessen Enden.

Bei einer Kombination einer Kunststoff-Führungsschiene mit einem Metallprofil wird der Versteifungsbereich der Schiene aus Metall hergestellt, während der Führungsbereich der besseren tribologischen Eigenschaften wegen aus Kunststoff besteht. Dabei besteht der Versteifungsbereich aus einem Metallprofil mit günstigen mechanischen Eigenschaften und zeichnet sich durch ein hohes Widerstandsmoment bei relativ geringem Gewicht aus. Der Führungsbereich aus Kunststoff ist mit dem Metallprofil form- und/oder kraftschlüssig verbunden, beispielsweise durch vollständiges oder teilweises Umspritzen des die Tragkonstruktion bildenden Metallprofils, durch Koextrusion des Kunststoffs auf dem Metallprofil oder durch nachträgliches Fügen des Kunststoffs und Metalls durch Kleben, Schweißen, Clipsen oder Stecken.

Beim Umspritzen des Metallprofils mit Kunststoff kann der Kunststoff neben der Führungsfunktion auch zur gezielten weiteren Versteifung des Metallprofils beitragen, indem durch Verrippungen und Aussteifungen eine Hybridstruktur erzeugt wird, die sowohl biege- als auch torsionssteif ist. Auf diese Weise kann ein einfaches, biegesteifes Metallprofil mit den Kunststoffrippen oder der Kunststoffstruktur zu einem torsions- und biegesteifen Funktionselement gemacht werden.

Weiterhin kann das Metallprofil in einen Kanal des Kunststoffkörpers der Führungsschiene eingesteckt sein. Alternativ kann an das biegesteife Metallprofil zur Verbesserung der Torsionssteifigkeit eine Kunststoffstruktur angespritzt sein. Da beispielsweise ein U-Profil nicht sehr verwindungssteif ist, wird durch Anspritzen einer Kunststoffstruktur das Profil verwindungssteif, obwohl der Kunststoff selbst insbesondere wegen seiner guten tribologischen Eigenschaften verwendet wird.

Die Führungsbereiche in Form von Führungsstegen, Rippen oder Führungselementen können mit einem Gleitlack überzogen oder mit einem geeigneten Substrat vakuum- oder plasmabeschichtet werden, beispielsweise mittels Plasma- CVD-Beschichtung, um die tribologischen Eigenschaften zu verbessern. Dabei kann der Gleitlack auch auf Kunststoff angewendet werden, wenn der Kunststoff mit guten mechanischen Festigkeitseigenschaften besonders tragfähig ist, aber keine besonders guten tribologischen Eigenschaften aufweist.

Eine Verbesserung der tribologischen Eigenschaften sowie auch der mechanischen Eigenschaften kann durch eine Vernetzung der Molekülstruktur zumindest der Oberfläche des verwendeten Werkstoffs erreicht werden, beispielsweise durch Einwirkung geeigneter chemischer Mittel oder durch eine ionisierende Strahlung, insbesondere eine Gammastrahlung. Ein thermoplastischer Werkstoff wird dabei zumindest teilweise in den duroplastischen Zustand überführt.

Die Festigkeit und Steifigkeit der Kunststoffschiene kann durch den Einsatz spezieller Werkzeug- und Verfahrenstechniken weiter gesteigert werden, beispielsweise durch den Einsatz eines Kaskadenangußsystems, durch das unerwünschte Bindenähte vermieden werden, oder durch Gegentakt-Spritzgießen mit faserverstärkten oder mit LCP-Werkstoffen, wodurch eine verstärkte Orientierung der Molekülstruktur und damit ein höheres E-Modul erreicht wird.

Der Verstärkungsbereich kann im Gegensatz zum durchgehenden Metallprofil so gestaltet werden, daß gemäß dem auftretenden Biegemoment der Querschnitt über die Länge hin entsprechend angepaßt ausgelegt wird.

Zur Herstellung der Kunststoffschiene kann speziell bei einem Einsatz langglasfaserverstärkter Thermoplaste ein Spritzpräge- oder Gasinnendruckverfahren eingesetzt werden, um die Materialeigenschaften bestmöglich zu nutzen und besonders verzugsarm zu fertigen.

Um die Kunststoffschiene ohne aufwendige Werkzeugtechnik sowohl mechanisch steif zu machen und trotzdem an der Oberfläche eine für Reibpaarungen günstige Oberfläche zu erzeugen, kann das 2-K-Spritzen im Overmoulding-Verfahren vorteilhaft eingesetzt werden. Die Oberfläche, besonders der der tribologischen Belastung ausgesetzte Führungsbereich, kann dabei durch ein unverstärktes Material ausgebildet werden, der Kern dagegen durch ein faserverstärktes Material.

An den Übergängen des Versteifungsbereiches zu den Befestigungspunkten der Führungsschiene können flexible Bereiche angeordnet werden, um einen Ausgleich für Längen- und/oder Winkeltoleranzen und gegebenenfalls vorliegenden Wärmedehnungsdifferenzen zwischen der Führungsschiene und der Türstruktur zu schaffen.

Die Führungsschiene kann als Kunststoffbauteil weitere angrenzende Bauteile oder deren Funktionen integrieren. Diese können z.B. eine Grundplatte, ein Lagerdeckel, Lagerstellen und Befestigungsstellen sein. Die Führungsschiene kann Bestandteil eines größeren Türmoduls sein, das weitere Funktionen integriert, wie beispielsweise ein Türschloß, die Türelektronik und Dichtfunktionen.

Als weitere Integrationsmöglichkeiten sind das Anspritzen der Umlenkrollen mit anschließend drehbarer Lagerung im 2-K-Verfahren möglich. Voraussetzung hierfür ist die Befestigung, z.B. die Vernietung oder Verschraubung der Schiene an der Türstruktur an den Lagerstellen der Umlenkrollen.

Anhand von in der Zeichnung dargestellten Ausführungsbeispielen soll der der Erfindung zugrundeliegende Gedanke näher erläutert werden. Es zeigen:
- Figur 1 -: eine Draufsicht auf eine Führungsschiene mit einem Führungsbereich, einem Versteifungsbereich sowie Befestigungs- und Anlenkstellen;
- Figur 2 -: eine perspektivische Seitenansicht der Führungsschiene gemäß Figur 1;
- Figur 3 -: einen Schnitt durch die Führungsschiene entlang der Linie III-III in Figur 1;
- Figur 4 -: einen Schnitt durch die Führungsschiene entlang der Linie IV-IV in Figur 1;
- Figur 5 -: einen Schnitt durch die Führungsschiene entlang der Linie V-V in Figur 1;
- Figur 6 -: eine schematische Schnittdarstellung eines teilweise mit Kunststoff umspritzten Metallprofils;
- Figur 7 -: eine schematische Seitenansicht und
- Figur 8 -: eine schematische Draufsicht auf eine Führungsschiene mit Längsdehnungsbereichen zwischen dem Versteifungs- und Befestigungsbereich.

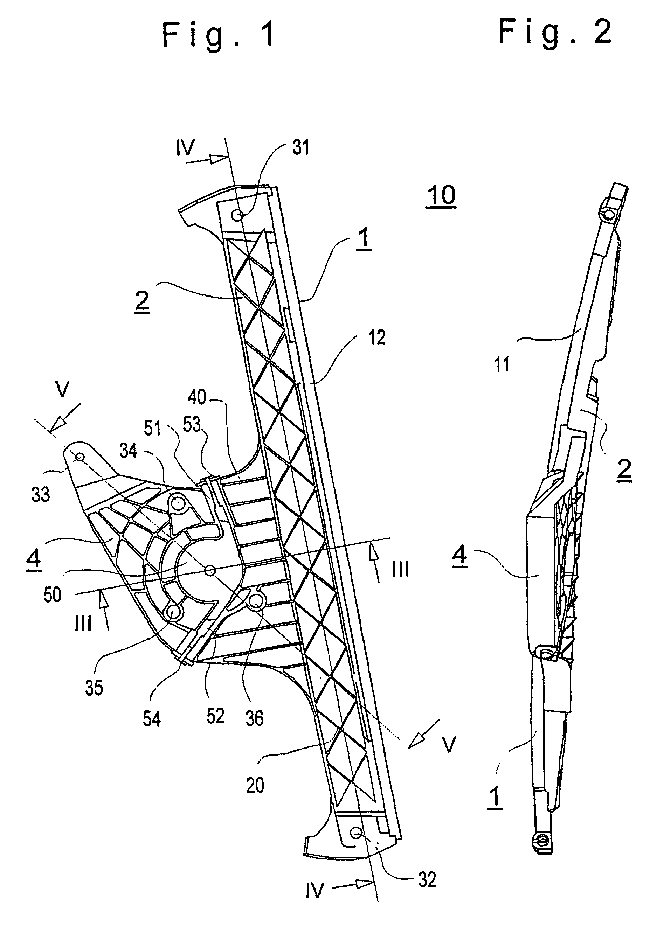

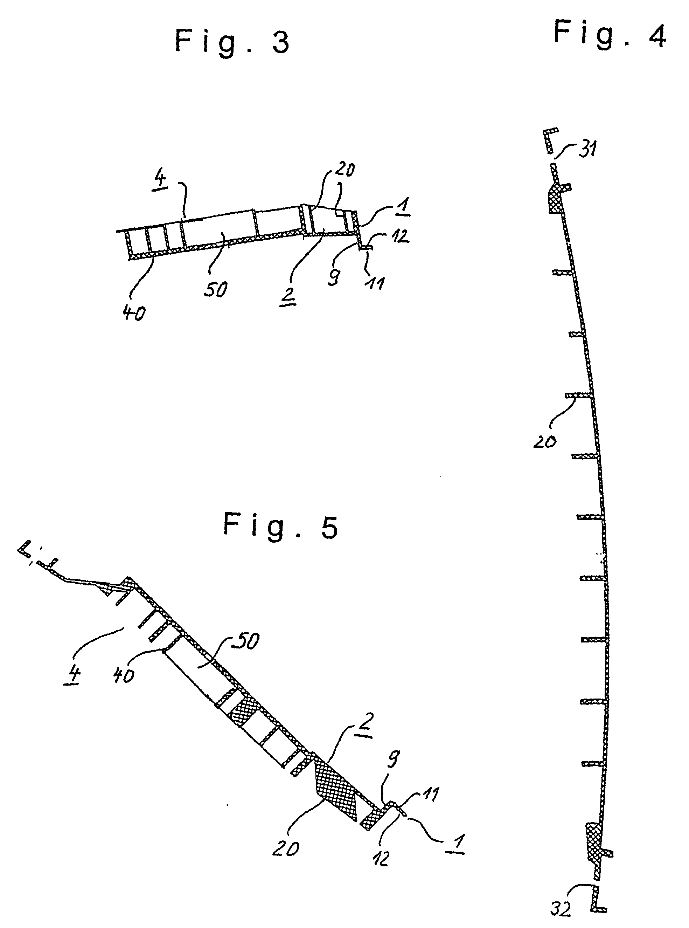

Die in Figur 1 in einer Draufsicht, in Figur 2 in einer perspektivischen Seitenansicht sowie in den Figuren 3 bis 5 in mehreren Schnitten dargestellte Führungsschiene 10 mit einstückig angeformter Grundplatte bzw. Lagerstelle 4 für eine Seilrolle und Anlenkpunkten 34 bis 36 für einen Lagerdeckel bzw. einen Fensterheberantrieb besteht vollständig aus Kunststoff oder einem teilweise mit Kunststoff umspritzten Metallprofil in der vorstehend beschriebenen Ausführung, Materialwahl und Materialzusammensetzung. Die Führungsschiene 10 ist in einen Führungsbereich 1 und einen Versteifungsbereich 2 unterteilt und weist zwei Befestigungsstellen 31, 32 auf, an denen sie mit einer Befestigungsbasis einer Fahrzeugtür, beispielsweise mit einer Trägerplatte oder einem Türinnenblech verbunden wird.

Der Führungsbereich 1 weist eine vordere Gleitfläche 11 und eine hintere Gleitfläche 12 zur Aufnahme eines Fensterscheiben-Mitnehmers oder Gleiters auf, der in Längsrichtung der Führungsschiene 10 auf den Gleitflächen 11, 12 und diese formschlüssig umgreifend entlanggleitet.

Der Versteifungsbereich 2 weist Versteifungselemente 20 auf, die senkrecht von der Fläche des Versteifungsbereichs 2 abstehen und ein Waffelmuster bzw. eine Kreuzverrippung bilden. Wie insbesondere der Schnittdarstellung in Figur 3 entlang der Linie III-III und Figur 5 entlang der Linie V-V gemäß Figur 1 zu entnehmen ist, ist der Führungsbereich 1 über einen kurzen Hebelarm 9 mit dem Versteifungsbereich 2 verbunden, so daß ein hohes Widerstandsmoment gegen ein Verbiegen des Führungsbereichs 1 infolge des auf den Gleitflächen 11, 12 entlanggleitenden Mitnehmers mit daran befestigter Fensterscheibe gewährleistet ist. Weiterhin verdeutlichen die Figuren 1, 3 und 5, daß die die Rückseite der Führungsflächen des Führungsbereichs 1 bildende Gleitfläche 12 nicht mit den als Rippen bzw. Stege ausgebildeten Versteifungselementen 20 des Versteifungsbereichs 2 in Verbindung steht, da ein zusätzlicher Steg 9 zwischen dem Führungsbereich 1 und dem Versteifungsbereich 2 angeordnet ist und beide Bereiche einstückig miteinander verbindet.

Die an den Versteifungsbereich 2 anschließende Lagerstelle 4 weist eine Vielzahl senkrecht von der Grundfläche der Lagerstelle 4 abstehende Rippen oder Stege 40 auf, die teilweise strahlenförmig um Anlenkpunkte 34 bis 36 für einen Lagerdeckel, Fensterheberantrieb oder dgl. angeordnet sind und so zu einer optimalen Kraftübertragung auf den Versteifungsbereich 2 sorgen. In gleicher Weise dienen parallel verlaufende Rippen oder Stege der Erhöhung der Festigkeitsstruktur der Führungsschiene 10.

Die Lagerstelle 4 weist einen hohlzylindrischen Innenraum 50 als Teil eines Antriebsgehäuses auf, von dem zwei Einführungskanäle 51, 52 für ein Antriebsseil ausgehen, dessen Bowdenhülle an Bowdenabstützungen 53, 54 mit dem Antriebsgehäuse verbunden ist. Das Antriebsseil wird jeweils über eine obere und untere Umlenkung im Bereich der Befestigungsstellen 31, 32 mit dem auf dem Führungsbereich 1 verstellbar geführten Mitnehmer verbunden. In den hohlzylindrischen Innenraum 50 des Antriebsgehäuses wird eine Seiltrommel eingelegt, deren zylindrische Außenfläche mit Seilführungen zur Aufnahme des Antriebsseils versehen ist.

Eine weitere Befestigungsstelle 33 dient zur Anlenkung der Lagerstelle 4 bzw. zur zusätzlichen Abstützung der Führungsschiene 10 an der Befestigungsbasis der Fahrzeugtür, d.h. an einer Trägerplatte, einem Türinnenblech oder einem Türmodul, in das die Führungsschiene 10 bei Bedarf auch integrierbar ist.

Die in den Figuren 1 bis 5 dargestellte Führungsschiene kann wahlweise komplett oder teilweise aus Kunststoff mit den vorstehend beschriebenen konstruktiven Merkmalen und Zusammensetzungen des Kunststoffs gefertigt werden. Durch die Unterteilung der Führungsschiene in einen Führungsbereich und einen Versteifungsbereich ist die Wahl eines Zwei- oder Mehrkomponenten-Spritzgießverfahrens möglich, bei dem der Versteifungsbereich aus einem Werkstoff mit hoher Festigkeit und hohem E-Modul besteht, und für den Führungsbereich ein tribologisch günstiger Werkstoff gewählt wird, der auf niedrige Reibbeiwerte, geringen Abrieb und niedrigen Geräuschpegel hin optimiert ist.

In einer alternativen Ausführungsform kann der Versteifungsbereich der Führungsschiene auch aus einem Metallprofil mit günstigen mechanischen Eigenschaften, das ein hohes Widerstandsmoment bei relativ geringem Gewicht gewährleistet, hergestellt werden, während der Führungsbereich der besseren tribologischen Eigenschaften wegen aus Kunststoff besteht. Beide Bereiche können form- und/oder kraftschlüssig miteinander verbunden werden, beispielsweise durch Umspritzen des Metallprofils mit einem Kunststoff, der neben der Führungsfunktion auch zur gezielten weiteren Versteifung des Metallprofils beiträgt, indem durch Verrippungen und Aussteifungen eine Hybridstruktur erzeugt wird, die sowohl biege- als auch torsionssteif ist.

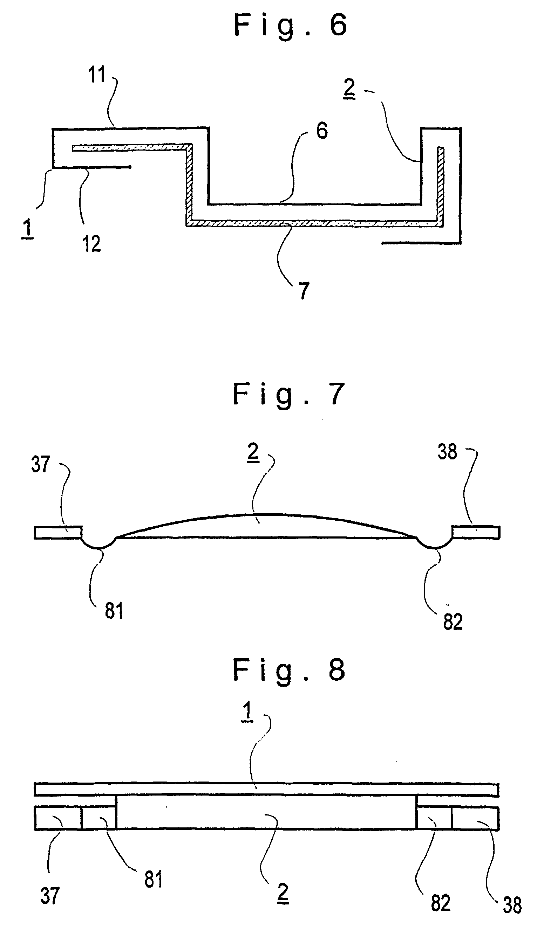

Eine solche Struktur ist in Figur 6 dargestellt und zeigt ein Metallprofil 7, das mit einem Kunststoff 6 teilweise umspritzt ist und zwar dort, wo der Führungsbereich 1 bzw. die Gleitflächen 11, 12 dies erfordern und zusätzlich in Bereichen des Versteifungsbereichs 2 zur weiteren Versteifung des Metallprofils sowie aus spritztechnischen Gründen zur formschlüssigen Verbindung des Kunststoffs 6 mit dem Metallprofil 7.

Alternativ hierzu kann die Verbindung zwischen dem Metallprofil und dem Kunststoff durch Koextrusion oder durch nachträgliches Fügen in Form von Kleben, Schweißen, Clipsen oder Stecken erfolgen.

Sowohl in der Anordnung gemäß Figur 6 als auch in der vorstehend beschriebenen Anordnung gemäß den Figuren 1 bis 5 kann der Führungsbereich 1 zusätzlich mit einem Gleitlack oder mit einem geeigneten Substrat vakuum- oder plasmabeschichtet werden, um auf diese Weise die tribologischen Eigenschaften des Führungsbereichs 1 weiter zu verbessern.

In den Figuren 7 und 8 ist eine weitere Möglichkeit dargestellt, die erfindungsgemäßen Merkmale einer Führungsschiene umzusetzen.

Diese Ausführungsform zeigt einen Versteifungsbereich 2, der nach dem Prinzip der Biegeträgerkonstruktion gestaltet ist und mittig einen größeren Querschnitt aufweist als an den Enden. An diese schließen sich flexible Bereiche 81, 82 an, die den Versteifungsbereich 2 mit Befestigungsstellen 37, 38 verbinden und einen Ausgleich für Längen- und/oder Winkeltoleranzen sowie von Wärmedehnungsdifferenzen zwischen der Führungsschiene und der Befestigungsbasis der Fahrzeugtür schaffen. Der Versteifungsbereich 2 ist in der vorstehend beschriebenen Weise mit dem Führungsbereich 1 so verbunden, daß die Rückseiten der Gleitflächen des Führungsbereichs nicht unmittelbar mit den Versteifungselementen des Versteifungsbereichs 2 verbunden sind.

In dieser Konfiguration sowie in der Ausführungsform gemäß den Figuren 1 bis 5 können weitere angrenzende Bauteile oder deren Funktionen in die Führungsschiene integriert werden, wie beispielsweise eine Grundplatte, Lagerdeckel, Lagerstellen oder Befestigungsstellen. Eine weitere Integrationsmöglichkeit besteht in dem Anspritzen der Umlenkrollen mit anschließend drehbarer Lagerung im Zwei- oder Mehrkomponenten-Spritzgießverfahren, indem die Führungsschiene in einem ersten Spritzvorgang mit Kavitäten im Bereich der Umlenkrollen und Achsen gespritzt und in einem zweiten Spritzvorgang die Umlenkrolle ausgespritzt wird. Die Befestigung, d.h. Vernietung oder Verschraubung der Führungsschiene an der Befestigungsbasis der Fahrzeugtür kann entsprechend den Merkmalen der DE 41 31 098 erfolgen, indem die Achse der Umlenkrolle unmittelbar mit der Befestigungsbasis verbunden wird.

## Patentansprüche

1. Führungsschiene (10) für einen Seil- oder Bowdenrohr-Fensterheber mit einem Führungsbereich (1) mit Gleitflächen zur Aufnahme und Gleitführung eines verschiebbar auf der Führungsschiene (10) gelagerten Mitnehmers und mit mindestens einem Befestigungsbereich (31, 32) zum Verbinden der Führungsschiene (10) mit einer Befestigungsbasis einer Fahrzeugtür, wobei zumindest der Führungsbereich (1) der Führungsschiene aus Kunststoff besteht,
**dadurch gekennzeichnet,**
**daß** die Führungsschiene einen mit dem Führungsbereich (1) verbundenen, separaten und somit nicht zur Führung des Mitnehmers dienenden, Versteifungsbereich (2) mit Versteifungselementen (20) aufweist, der sich in Schienenlängsrichtung zumindest über den mittleren Abschnitt des Führungsbereiches (1) erstreckt und daß der mindestens eine Befestigungsbereich (31, 32) Teil des Versteifungsbereichs (2) ist.

2. Führungsschiene nach Anspruch 1, **dadurch gekennzeichnet, daß** die Rückseiten (12) der Gleitflächen (11, 12) des Führungsbereichs (1) nicht unmittelbar mit den Versteifungselementen (20) verbunden sind.

3. Führungsschiene nach Anspruch 1 oder 2, **dadurch gekennzeichnet, daß** die Versteifungselemente (20) aus Rippen und/oder Stegen bestehen, die an eine Fläche des Versteifungsbereichs (2) vorzugsweise integral und im wesentlichen senkrecht zur Fläche des Versteifungsbereichs (2) angeformt sind.

4. Führungsschiene nach mindestens einem der vorangehenden Ansprüche, **dadurch gekennzeichnet, daß** die Rippen oder Stege (20) als Waffelmuster oder Kreuzverrippung ausgebildet sind.

5. Führungsschiene nach mindestens einem der vorangehenden Ansprüche, **dadurch gekennzeichnet, daß** um Krafteinleitungspunkte wie Befestigungs- und Lagerstellen (31 bis 38) strahlenförmig von den Krafteinleitungspunkten ausgehende oder parallel zueinander verlaufende Rippen und/oder Stege (40) angeordnet sind.

6. Führungsschiene nach mindestens einem der vorangehenden Ansprüche, **dadurch gekennzeichnet, daß** die Versteifungselemente, Rippen oder Stege (20, 40) aus Hohlprofilen bestehen.

7. Führungsschiene nach mindestens einem der vorangehenden Ansprüche, **dadurch gekennzeichnet, daß** der Versteifungsbereich (2) nach dem Prinzip der Biegeträgerkonstruktion gestaltet ist und daß der Kunststoff verstärkende Fasern enthält, insbesondere Glas- oder Kohlefasern.

8. Führungsschiene nach mindestens einem der vorangehenden Ansprüche, **dadurch gekennzeichnet, daß** der Versteifungsbereich (2) aus einem Metallprofil oder aus Kunststoff (6) mit einem verstärkenden Metallprofil (7) besteht.

9. Führungsschiene nach Anspruch 8, **dadurch gekennzeichnet, daß** das Metallprofil (7) ganz oder teilweise mit Kunststoff (6) umspritzt ist.

10. Führungsschiene nach Anspruch 8, **dadurch gekennzeichnet, daß** das Metallprofil (7) mit dem Kunststoffkörper der Führungsschiene (1) durch Kleben, Schweißen oder Clipsen verbunden ist.

11. Führungsschiene nach Anspruch 8, **dadurch gekennzeichnet, daß** das Metallprofil (7) in einen Kanal des Kunststoffkörpers der Führungsschiene (1) eingesteckt ist.

12. Führungsschiene nach Anspruch 8, **dadurch gekennzeichnet, daß** an das biegesteife Metallprofil (7) zur Verbesserung der Torsionssteifigkeit eine Kunststoffstruktur (6) angespritzt ist.

13. Führungsschiene nach Anspruch 8, **dadurch gekennzeichnet, daß** das Metallprofil (7) durch Koextrusion mit Kunststoff (6) zur Führungsschiene (1) ausgebildet ist.

14. Führungsschiene nach mindestens einem der vorangehenden Ansprüche, **dadurch gekennzeichnet, daß** die Kunststoffe für den Führungsbereich (1) und für den Versteifungsbereich (2) mittels Zwei- oder Mehrkomponenten-Kunststofftechnik zur Führungsschiene (10) geformt sind.

15. Führungsschiene nach mindestens einem der vorangehenden Ansprüche, **dadurch gekennzeichnet, daß** die Befestigungsstellen (31, 32; 37, 38) der Führungsschiene (10) in den Umlenkbereichen des Seils vorgesehen sind und daß zwischen dem Mittelteil der Führungsschiene (10) und wenigstens einem Umlenkbereich ein Ausgleichsbereich (81, 82) zur Kompensation von thermisch bedingten Unterschieden der Längenausdehnung der Führungsschiene (10) und der aus Metall bestehenden Befestigungsbasis (37, 38) und/oder zur Kompensation von Fluchtungsfehlern zwischen dem Umlenkbereich der Führungsschiene (10) und der Befestigungsbasis vorgesehen ist.

16. Führungsschiene nach mindestens einem der vorangehenden Ansprüche, **gekennzeichnet durch** eine einstückig angeformte Grundplatte und/oder einstückig angeformte Lagerstellen (4) für ein Getriebeelement oder mehrere Getriebeelemente und/oder einstückig angeformte Befestigungsstellen (31 bis 36).

17. Führungsschiene nach mindestens einem der vorangehenden Ansprüche, **dadurch gekennzeichnet, daß** die Führungsschiene (10) Bestandteil eines Türmoduls aus Kunststoff ist.

18. Verfahren zur Herstellung einer Führungsschiene (10) für einen Seil- oder Bowdenrohr-Fensterheber mit einem Führungsbereich (1) mit Gleitflächen zur Aufnahme und Gleitführung eines verschiebbar auf der Führungsschiene (10) gelagerten Mitnehmers und mit mindestens einer Befestigungsstelle (31, 32) zum Verbinden der Führungsschiene (10) mit einer Befestigungsbasis einer Fahrzeugtür, wobei zumindest der Führungsbereich (1) der Führungsschiene aus Kunststoff gezogen, gepreßt oder gegossen wird,
**dadurch gekennzeichnet,**
**daß** an den Führungsbereich (1) ein separater und somit nicht zur Führung des Mitnehmers dienender Versteifungsbereich (2) mit Versteifungselementen (20) angeformt oder mit dem Führungsbereich (1) verbunden wird, wobei sich der Versteifungsbereich in Schienenlängsrichtung zumindest über den mittleren Abschnitt des Führungsbereiches (1) erstreckt.

19. Verfahren nach Anspruch 18, **dadurch gekennzeichnet, daß** die Führungsschiene (10) aus einem homogenen Kunststoff hergestellt wird.

20. Verfahren nach Anspruch 18, **dadurch gekennzeichnet, daß** die Führungsschiene (10) aus einem Gemisch und/oder einer Verbindung von Kunststoffen mit unterschiedlichen Eigenschaften in einem Fertigungsgang hergestellt wird.

21. Verfahren nach Anspruch 18, **dadurch gekennzeichnet, daß** die Führungsschiene (10) aus einer Kombination von Kunststoff und Metall in einem Fertigungsgang hergestellt wird.

22. Verfahren nach Anspruch 21, **dadurch gekennzeichnet, daß** eine metallische Tragkonstruktion vollständig oder teilweise mit Kunststoff umspritzt wird.

23. Verfahren nach Anspruch 21, **dadurch gekennzeichnet, daß** Kunststoff auf ein Metallprofil koextrudiert wird.

24. Verfahren nach Anspruch 21, **dadurch gekennzeichnet, daß** die Kunststoff- und Metallteile der Führungsschiene (10) nachträglich miteinander verklebt, verschweißt, geclipst oder gesteckt werden.

25. Verfahren nach Anspruch 21, **dadurch gekennzeichnet, daß** ein einfaches biegesteifes Metallprofil in Hybridtechnik mit Kunststoffrippen und/oder einer Kunststoffstruktur zu einem torsions- und biegesteifen Funktionselement geformt wird.

26. Verfahren nach mindestens einem der vorangehenden Ansprüche 18 bis 25, **dadurch gekennzeichnet, daß** nach dem Urformen der Führungsschiene (10) der Kunststoff des Führungsbereichs (1) mit Mitteln behandelt wird, die zu einer Verbesserung der tribologischen Eigenschaften des Führungsbereichs (1) führen.

27. Verfahren nach mindestens einem der vorangehenden Ansprüche 18 bis 26, **dadurch gekennzeichnet, daß** eine Vernetzung der Molekülstruktur durch Einwirkung geeigneter chemischer Mittel oder durch ionisierende Strahlung herbeigeführt wird.

28. Verfahren nach mindestens einem der vorangehenden Ansprüche 18 bis 27, **dadurch gekennzeichnet, daß** der Kunststoff von einem thermoplastischen in einen duroplastischen Zustand überführt wird.

29. Verfahren nach mindestens einem der vorangehenden Ansprüche 18 bis 28, **dadurch gekennzeichnet, daß** die Molekülstruktur des Kunststoffs durch Gegentakt-Spritzgießen, Spritzprägen mit Glasfasern und/oder Overmoulding einheitlich ausgerichtet wird.

## Claims

1. Guide rail (10) for a cable or Bowden cable window lifter with a guide area (1) with glide faces for holding and guiding a follower mounted displaceable on the guide rail (10) and with at least one fixing area (31, 32) for connecting the guide rail (10) to a fixing base of a vehicle door, wherein at least the guide area (1) of the guide rail consists of plastics
**characterised in that**
the guide rail has a separate, and therefore not serving as a guide for the follower, reinforcement area (2) with reinforcement elements (20) connected to the guide area (1) and extending in the longitudinal direction of the rail at least over the middle section of the guide area (1), and that the at least one fixing area (31, 32) is part of the reinforcement area (2).

2. Guide rail according to claim 1 **characterised in that** the rear sides (12) of the slide faces (11, 12) of the guide area (1) are not connected directly to the reinforcement elements (20).

3. Guide rail according to claim 1 or 2 **characterised in that** the reinforcement elements (20) consist of ribs and/or webs which are formed on a surface of the reinforcement area (2) preferably integral and substantially perpendicular to the surface of the reinforcement area (2).

4. Guide rail according to at least one of the preceding claims **characterised in that** the ribs or webs (20) are formed as a waffle pattern or cross ribbing.

5. Guide rail according to at least one of the preceding claims **characterised in that** ribs and/or webs (40) are arranged around force introduction points such as fixing and bearing points (31 to 38) and extend like rays from the force introduction points or run parallel to each other.

6. Guide rail according to at least one of the preceding claims, **characterised in that** the reinforcement elements, ribs or webs (20, 40) are made from hollow profiles.

7. Guide rail according to at least one of the preceding claims **characterised in that** the reinforcement area (2) is formed on the principle of the bending support structure and that the plastics contains reinforcing fibres, more particularly glass or carbon fibres.

8. Guide rail according to at least one of the preceding claims **characterised in that** the reinforcement area (2) is made from a metal profile or of plastics (6) with a reinforcing metal profile (7).

9. Guide rail according to claim 8 **characterised in that** the metal profile (7) is over moulded completely or in part with plastics (6).

10. Guide rail according to claim 8 **characterised in that** the metal profile (7) is connected to the plastics body of the guide rail (1) by adhesive, welding or clips.

11. Guide rail according to claim 8 **characterised in that** the metal profile (7) is inserted in a channel of the plastics body of the guide rail (1).

12. Guide rail according to claim 8 **characterised in that** a plastics structure (6) is injected on the bending-resistant metal profile (7) to improve the torsion resistance.

13. Guide rail according to claim 8 **characterised in that** the metal profile is formed by co-extrusion with the plastics into the guide rail (1).

14. Guide rail according to at least one of the preceding claims **characterised in that** the plastics for the guide area (1) and for the reinforcement area (2) are moulded by the twin or multi component plastics technique into the guide rail (10).

15. Guide rail according to at least one of the preceding claims **characterised in that** the fastening spots (31, 32, 37, 38) of the guide rail (10) are provided in the deflection areas of the cable and that between the centre part of the guide rail (10) and at least one deflection area there is a compensating area (81, 82) for compensating thermally conditioned differences in the longitudinal extension of the guide rail (10) and the fixing base (37, 38) made of metal and/or for compensating the alignment errors between the guide area of the guide rail (10) and the fixing base.

16. Guide rail according to at least one of the preceding claims **characterised by** an integral moulded base plate and/or integral moulded bearing spots (4) for a gearing element or several gearing elements and/or integral moulded fixing spots (31 to 36).

17. Guide rail according to at least one of the preceding claims, **characterised in that** the guide rail (10) is a constituent part of a door module of plastics.

18. Method for manufacturing a guide rail (10) for a cable or Bowden cable window lifter with a guide area (1) with slide faces for holding and the sliding guide of a follower mounted displaceable on the guide rail (10) and with at least one fixing point (31, 32) for connecting the guide rail (10) with a fixing base of a vehicle door wherein at least the guide area (1) of the guide rail is drawn, pressed or cast from plastics,
**characterised in that**
a separate reinforcement area (2), which thus does not serve for guiding the follower, with reinforcement elements (20) is moulded on the guide area (1) or is connected to the guide area (1), wherein the reinforcement area extends in the longitudinal direction of the rail at least over the middle section of the guide area (1).

19. Method according to claim 18 **characterised in that** the guide rail (10) is made from a homogeneous plastics.

20. Method according to claim 18 **characterised in that** the guide rail (10) is made from a mixture and/or a connection of plastics with different properties in one manufacturing step.

21. Method according to claim 18 **characterised in that** the guide rail (10) is made from a combination of plastics and metal in one manufacturing step.

22. Method according to claim 21 **characterised in that** a metal support structure is overmoulded completely or in part with plastics.

23. Method according to claim 21 **characterised in that** plastics is co-extruded onto a metal profile.

24. Method according to claim 21 **characterised in that** the plastics and metal parts of the guide rail (10) are subsequently stuck, welded, clipped or push-fitted together.

25. Method according to claim 21 **characterised in that** a simple bending-resistant metal profile is formed in hybrid technology with plastics ribs and/or a plastics structure into a torsion and bending resistant function element.

26. Method according to at least one of the preceding claims 18 to 25 **characterised in that** after the original shaping of the guide rail (10) the plastics of the guide area (1) is treated with means which lead to an improvement in the tribological properties of the guide area (1).

27. Method according to at least one of the preceding claims 18 to 26 **characterised in that** cross-linking of the molecular structure is brought about by the action of suitable chemical means or by ionising radiation.

28. Method according to at least one of the preceding claims 18 to 27 **characterised in that** the plastics is changed from a thermoplastics into a duroplastics state.

29. Method according to at least one of the preceding claims 18 to 28 **characterised in that** the molecular structure of the plastics is uniformly aligned through counter-beat injection casting, injection-stamping with glass fibres and/or overmoulding.

## Revendications

1. Rail de guidage (10) pour un lève-vitre à câble ou à tube Bowden, comportant une zone de guidage (1) à surfaces de coulissement pour le logement et le guidage coulissant d'un entraîneur monté mobile en translation sur le rail de guidage (10), et au moins une zone de fixation (31, 32) pour la liaison du rail de guidage (10) avec une base de fixation d'une porte de véhicule, au moins la zone de guidage (1) du rail de guidage étant constituée en matière plastique,
**caractérisé en ce que**
le rail de guidage comprend une zone de rigidification (2), avec des éléments de rigidification (20), qui est reliée à la zone de guidage (10) et qui est séparée et ne sert donc pas au guidage de l'entraîneur, ladite zone s'étendant en direction longitudinale du rail au moins par-dessus le tronçon médian de la zone de guidage (1), et **en ce que** ladite au moins une zone de fixation (31, 32) fait partie de la zone de rigidification (2).

2. Rail de guidage selon la revendication 1, **caractérisé en ce que** les faces postérieures (12) des surfaces de glissement (11, 12) de la zone de guidage (1) ne sont pas immédiatement reliées aux éléments de rigidification (20).

3. Rail de guidage selon l'une ou l'autre des revendications 1 et 2, **caractérisé en ce que** les éléments de rigidification (20) sont constitués par des nervures et/ou des barrettes qui sont conformées sur une surface de la zone de rigidification (2) de préférence de façon intégrale et sensiblement perpendiculairement à la surface de la zone de rigidification (2).

4. Rail de guidage selon l'une au moins des revendications précédentes, **caractérisé en ce que** les nervures ou barrettes (20) sont réalisées sous forme de motif gaufré ou de système de nervures croisées.

5. Rail de guidage selon l'une au moins des revendications précédentes, **caractérisé en ce qu'**il est prévu, autour de points d'application de force, tels que des emplacements de fixation et de montage (31 à 38), des nervures et/ou des barrettes (40) partant en forme de rayons depuis les points d'application de forces ou s'étendant parallèlement les unes aux autres.

6. Rail de guidage selon l'une au moins des revendications précédentes, **caractérisé en ce que** les éléments de rigidification, les nervures ou les barrettes (20, 40) sont constitués par des profilés creux.

7. Rail de guidage selon l'une au moins des revendications précédentes, **caractérisé en ce que** la zone de rigidification (2) est réalisée selon le principe de construction à poutres sous flexion, et **en ce que** la matière plastique comprend des fibres de renforcement, en particulier des fibres de verre ou de carbone.

8. Rail de guidage selon l'une au moins des revendications précédentes, **caractérisé en ce que** la zone de rigidification (2) est constituée par un profilé métallique ou en matière plastique (6) comportant un profilé métallique de renforcement (7).

9. Rail de guidage selon la revendication 8, **caractérisé en ce que** le profilé métallique (7) est surmoulé par injection complètement ou partiellement en matière plastique.

10. Rail de guidage selon la revendication 8, **caractérisé en ce que** le profilé métallique (7) est relié au corps en matière plastique du rail de guidage (1) par collage, soudage ou clipsage.

11. Rail de guidage selon la revendication 8, **caractérisé en ce que** le profilé métallique (7) est enfiché dans un canal du corps en matière plastique du rail de guidage (1).

12. Rail de guidage selon la revendication 8, **caractérisé en ce qu'**une structure en matière plastique (6) est agencée par injection sur le profilé métallique (7) rigide en flexion pour améliorer la rigidité en torsion.

13. Rail de guidage selon la revendication 8, **caractérisé en ce que** le profilé métallique (7) est réalisé par co-extrusion avec la matière plastique (6) pour former le rail de guidage (10).

14. Rail de guidage selon l'une au moins des revendications précédentes, **caractérisé en ce que** les matières plastiques pour la zone de guidage (1) et pour la zone de rigidification sont mises sous la forme de rail de guidage (10) par une technique de matière plastique à deux ou à plusieurs composantes.

15. Rail de guidage selon l'une au moins des revendications précédentes, **caractérisé en ce que** les emplacements de fixation (31, 32 ; 37, 38) du rail de guidage (10) sont prévus dans les zones de renvoi du câble, et **en ce qu'**une zone de compensation (81, 82) est prévue entre la partie centrale du rail de guidage (10) et au moins une zone de renvoi, destinée à la compensation de différences, dues à des causes thermiques, de la dilatation en longueur du rail de guidage (10) et de la base de fixation (37, 38) constituée en métal et/ou à la compensation d'erreurs d'alignement entre la zone de renvoi du rail de guidage (10) et la base de fixation.

16. Rail de guidage selon l'une au moins des revendications précédentes, **caractérisé par** une plaque de base conformée d'un seul tenant et/ou par des emplacements de montage (4) conformés d'un seul tenant pour un élément de transmission ou pour plusieurs éléments de transmission, et/ou par des emplacements de fixation (31 à 36) conformés d'un seul tenant.

17. Rail de guidage selon l'une au moins des revendications précédentes, **caractérisé en ce que** le rail de guidage (10) fait partie d'un module de porte en matière plastique.

18. Procédé pour réaliser un rail de guidage (10) pour un lève-vitre à câble ou à tube Bowden, comportant une zone de guidage (1) à surfaces de coulissement pour le logement et le guidage coulissant d'un entraîneur monté mobile en translation sur le rail de guidage (10), et au moins une zone de fixation (31, 32) pour la liaison du rail de guidage (10) avec une base de fixation d'une porte de véhicule, au moins la zone de guidage (1) du rail de guidage étant réalisée en matière plastique par étirage, par pressage ou par coulée,
**caractérisé en ce que**
l'on forme sur la zone de guidage (1) une zone de rigidification (2) avec des éléments de rigidification (20), qui est séparée et qui ne sert donc pas au guidage de l'entraîneur, ou on la relie à la zone de guidage (1), la zone de rigidification s'étendant en direction longitudinale du rail au moins par-dessus le tronçon médian de la zone de guidage (1).

19. Procédé selon la revendication 18, **caractérisé en ce que** l'on réalise le rail de guidage (10) en une matière plastique homogène.

20. Procédé selon la revendication 18, **caractérisé én ce que** l'on réalise en une seule passe le rail de guidage (10) en un mélange et/ou en un composé de matières plastiques présentant des propriétés différentes.

21. Procédé selon la revendication 18, **caractérisé en ce que** l'on réalise par une seule passe le rail de guidage (10) en une combinaison de matière plastique et de métal.

22. Procédé selon la revendication 21, **caractérisé en ce que** l'on surmoule par injection une construction porteuse métallique complètement ou partiellement en matière plastique.

23. Procédé selon la revendication 21, **caractérisé en ce que** la matière plastique est co-extrudée sur un profilé métallique.

24. Procédé selon la revendication 21, **caractérisé en ce que** l'on colle, on soude, on clipse ou on enfiche ultérieurement les pièces en matière plastique et en métal du rail de guidage (10) les unes avec les autres.

25. Procédé selon la revendication 21, **caractérisé en ce que** l'on forme un profilé métallique simple rigide en flexion par une technique hybride avec des nervures en matière plastique et/ou avec une structure en matière plastique, pour former un élément fonctionnel rigide en torsion et en flexion.

26. Procédé selon l'une au moins des revendications 18 à 25, **caractérisé en ce qu'**après le formage initial du rail de guidage (10), on traite la matière plastique de la zone de guidage (1) avec des moyens qui mènent à une amélioration des propriétés tribologiques de la zone de guidage (1).

27. Procédé selon l'une au moins des revendications 18 à 26, **caractérisé en ce que** l'on provoque une réticulation de la structure moléculaire par action de moyens chimiques appropriés ou par irradiation ionisante.

28. Procédé selon l'une au moins des revendications 18 à 27, **caractérisé en ce que** l'on amène la matière plastique depuis un état thermoplastique vers un état duroplastique.

29. Procédé selon l'une au moins des revendications 18 à 28, **caractérisé en ce que** l'on oriente uniformément la structure moléculaire de la matière plastique par coulée-injection "push-pull", par estampage-injection avec des fibres de verre et/ou par surmoulage.
